# FASCICULE DE BREVET EUROPEEN

(11) **EP 1 473 659 B1**
(45) Date de publication et mention de la délivrance du brevet: **03.08.2011**
(21) Numéro de dépôt: 04101453.1
(22) Date de dépôt: 08.04.2004
(51) Int. Cl.: G06K 13/08

(54) **Agencement pour le blocage d'un support de données dans un dispositif d'échange de données**
Anordnung zum Blockieren eines Datenträgers in einer Datenaustausch-Vorrichtung
Arrangement for blocking a data carrier in a device for data exchange

(30) Priorité: 30.04.2003 FR 0305394
(43) Date de publication de la demande: 03.11.2004
(73) Titulaire: VALEO SECURITE HABITACLE S.A.S., 94042 Créteil Cédex (FR)
(72) Inventeur: Calor, Hervé VALEO SECURITE HABITACLE, 94042 CRETEIL Cedex (FR); Canard, Louis VALEO SECURITE HABITACLE, 94042 CRETEIL Cedex (FR)
(74) Mandataire: Jacquot, Ludovic R. G.

(56) Documents cités:
- FR-A- 2 779 563
- FR-A- 2 818 780
- US-A- 5 155 663
- US-A1- 2001 008 812
- US-A1- 2001 012 712
- US-B1- 6 315 583

## Description

La présente invention concerne un agencement pour l'échange de données entre un support de données rigide, ou semi-rigide, et un dispositif d'échange de données, notamment de lecture de données contenues dans le support.

L'invention concerne plus particulièrement un tel agencement pour l'échange de données entre un support de données rigide, ou semi-rigide, et un dispositif d'échange de données, notamment de lecture de données contenues dans le support, du type comportant un boîtier dans lequel le support de forme générale parallélépipédique est introduit longitudinalement, manuellement d'arrière en avant, dans un logement du boîtier dans lequel il occupe une position active déterminée, et du type dans lequel le dispositif comporte un organe de blocage qui est monté pivotant par rapport au boîtier entre une position de blocage dans laquelle il retient longitudinalement le support de données en position active dans le boîtier, et une position escamotée permettant l'extraction du support de données hors du boîtier, et un organe de commande de l'organe de blocage avec lequel est destiné à coopérer le bord transversal avant du support de données.

On connaît de nombreux exemples de tels agencements destinés à équiper un véhicule automobile et dans lesquels le support de données, qui est par exemple en forme de carte ou de badge globalement rectangulaire, porte des données d'identification de l'utilisateur du véhicule qui l'autorisent lorsqu'il introduit le support dans le dispositif de lecture, à utiliser le véhicule en lui permettant notamment de procéder au démarrage du moteur du véhicule.

Pour ce faire, le support de données comporte par exemple un circuit intégré, ou puce, qui est relié à des moyens de lecture du dispositif par des contacts électriques et/ou par une antenne d'échange de données.

Ainsi, lors de l'introduction du badge ou de la carte dans le dispositif, celle-ci est introduite manuellement dans un logement du boîtier dans lequel le support de données occupe une position active déterminée, et le dispositif qui reçoit la carte ou le badge comporte des moyens pour retenir longitudinalement ce support de données en position active dans le boîtier de manière que l'échange de données soit assuré dans de bonnes conditions.

Selon la conception la plus répandue, ces moyens de retenue sont constitués par des simples freins, c'est-à-dire qu'il s'agit de pattes déformables élastiquement qui coopèrent par friction avec des bords latéraux et/ou avec les grandes faces de la carte.

Une telle conception des moyens de retenue du support de données dans le dispositif de lecture n'est pas entièrement satisfaisante dans le cas d'une application à un véhicule automobile dans lequel le dispositif est soumis, lors du roulage, à de nombreuses vibrations qui provoquent progressivement l'éjection du support de données, ou tout au moins son déplacement par rapport à sa position active dite de lecture.

De plus, dans le cas d'une application à un véhicule automobile, il est nécessaire de pouvoir non seulement retenir le support de données en position active, mais aussi le verrouiller en le bloquant dans cette position, en réponse à un ordre de commande de verrouillage, de manière à éviter que dans certaines configurations d'utilisation du véhicule, le conducteur ou un passager puisse extraire inopinément le support de données du dispositif de lecture.

Afin d'améliorer le confort d'utilisation d'un tel agencement, il a déjà été proposé de prévoir des moyens d'assistance à l'introduction et/ou à l'extraction du support de données dans le dispositif.

A cet effet, il a déjà été proposé que le dispositif comporte un tiroir motorisé dans lequel la carte est mise en place manuellement et qui est ensuite commandée électriquement en déplacement entre sa position de repos dans laquelle on introduit la carte et une position active de lecture dans laquelle le tiroir amène la carte en regard de moyens de lecture.

Une telle conception est complexe et lourde et peu adaptée à son intégration dans le cadre d'une application à un véhicule automobile.

En vue de prévoir des moyens d'assistance à l'éjection, il a aussi été proposé de nombreuses applications dans lesquelles l'utilisateur, lors de l'introduction, agit à l'encontre d'un ressort de rappel qui accumule de l'énergie, la carte étant bloquée en position active par des moyens commandés de retenue, le ressort préalablement bandé restituant l'énergie en vue d'assister l'extraction de la carte, cette assistance pouvant aboutir jusqu'à une éjection complète hors du logement du boîtier.

Une telle conception n'est pas non plus entièrement satisfaisante dans la mesure où elle nécessite un effort important en fin de course d'introduction de la carte et dans la mesure où les moyens connus de retenue à l'encontre de l'effort appliqué à la carte par le dispositif élastique de rappel ne sont pas adaptés à une application à un véhicule automobile, les vibrations lors du roulage risquant de provoquer leur déclenchement et l'éjection inopinée et dangereuse de la carte.

Selon une autre conception connue du document FR -A-2 779 563, le support de données comporte une fenêtre, et le boîtier comporte un levier de blocage du support qui est monté pivotant, autour d'un axe transversal, entre une position stable de blocage vers laquelle le levier de blocage du support est rappelé élastiquement et dans laquelle un doigt de blocage formé à l'extrémité libre d'un bras du levier de blocage s'étend verticalement à l'intérieur de la fenêtre, et une position stable escamotée vers laquelle le levier est rappelé élastiquement et dans laquelle le doigt de blocage est situé hors de la fenêtre pour permettre l'extraction du support de données hors du boîtier.

Dans cette conception, le levier de blocage est rappelé élastiquement, vers ses deux positions stables de blocage et escamotée, par un ressort bistable.

La présente invention vise à augmenter la fiabilité de fonctionnement durant toute la durée de vie d'un véhicule et cela quel que soit le nombre d'introductions et d'extractions du support de données.

Afin de remédier aux inconvénients qui viennent d'être mentionnés, l'invention propose un agencement selon la revendication 1.

Avantageusement, la fiabilité d'un agencement selon l'invention est améliorée par l'utilisation d'organe élastique tel que des ressorts à boudin de compression ou de traction, tout en réduisant le coût de production.

De plus, l'agencement selon l'invention comporte moins de composants et présente une grande simplicité de montage de manière à en réduire les coûts, tout en garantissant un blocage robuste du support de donnée et un grand confort d'utilisation.

Grâce à l'invention, le support de données n'est pas exposé à des frottements susceptibles d'en détériorer l'aspect extérieur, puisque le blocage du support de données n'intervient qu'à la fin de la course d'introduction du support de données.

Selon d'autres caractéristiques de l'invention :
- l'organe de commande comporte un profil de came et l'organe de blocage comporte un doigt de commande formant suiveur de came qui coopère avec le profil de came ;
- le doigt de commande coopère avec une portion inclinée du profil de came formant rampe de commande du passage de l'organe de blocage, au cours de l'introduction du support de données, de sa position de blocage à sa position escamotée ;
- l'organe de blocage comporte un doigt de blocage qui, en position de blocage, coopère avec un cran complémentaire du support de données ;
- le cran complémentaire est réalisé dans au moins un bord longitudinal du support de données et est ouvert transversalement pour recevoir le doigt de blocage ;
- l'organe de blocage comporte un bras latéral de blocage d'orientation globalement longitudinale dont une extrémité avant est montée pivotante autour de l'axe vertical (A) et dont l'extrémité arrière porte le doigt de blocage ;
- le bras latéral de blocage est une lame déformable élastiquement qui constitue les moyens de rappel élastique de l'organe de blocage ;
- l'organe de blocage est un levier monté pivotant autour de l'axe vertical (A) qui comporte le bras latéral de blocage et un bras transversal de rappel qui est sollicité à son extrémité libre par les moyens de rappel élastique ;
- les moyens de rappel élastique sollicite en permanence le doigt de commande de l'organe de blocage en contact avec le profil de came de l'organe de commande ;
- le doigt de blocage présente, en section par un plan longitudinal, un profil en forme de « V » dont les deux branches constituent des profils de came arrière et avant ;
- le profil de came arrière du doigt de blocage constitue le doigt de commande formant suiveur de came qui coopère avec le profil de came de l'organe de commande ;
- le profil de came avant du doigt de blocage coopère, lors de l'extraction du support de données, avec un bord transversal avant de forme complémentaire du cran latéral du support de données ;
- l'agencement comporte un organe élastique qui est interposé entre l'organe de commande et le boîtier et en ce que le déplacement de l'organe de commande de sa position arrière de repos vers sa position avant s'effectue à l'encontre de cet organe élastique de manière à constituer un organe d'éjection automatique du support de données ;
- l'agencement comporte un ressort unique de compression qui sollicite à l'avant le bras de rappel du levier et à l'arrière l'organe de commande de manière à faire fonction d'organe élastique de l'organe de commande et de moyens de rappel élastique de l'organe de blocage ;
- l'extrémité libre du bras de rappel sur laquelle agissent les moyens de rappel élastique constitue un logement avant du ressort ;
- en position arrière de repos, l'organe de commande obture une fenêtre d'introduction du support de données dans le logement ;
- l'agencement comporte des moyens de butée avant et arrière solidaires du boîtier qui déterminent respectivement les positions avant de blocage et arrière de repos de l'organe de commande ;
- en position active, au moins une partie arrière du support de données fait saillie hors du boîtier de manière à constituer une partie de préhension permettant de l'extraire hors du boîtier ;
- le dispositif comporte un organe commandé de verrouillage de l'organe de blocage dans la position de blocage, le support de données étant en position active ;

- l'organe commandé de verrouillage est un électroaimant dont le noyau mobile constitue un doigt de verrouillage qui peut être commandé en saillie à l'extérieur du boîtier de l'électroaimant pour s'étendre en regard d'une partie de l'organe de blocage afin d'empêcher tout pivotement de ce dernier de sa position de blocage vers sa position escamotée ;

- l'agencement équipe un véhicule automobile dont les fonctions d'antivol sont partiellement ou totalement assurées par traitement de données dont certaines, contenues dans le support de données, sont représentatives d'un utilisateur autorisé, ou d'un groupe d'utilisateurs autorisés, du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue de dessus en perspective de trois-quarts arrière qui illustre schématiquement les principaux composants d'un agencement selon un premier mode de réalisation de l'invention, sur laquelle le support de données est illustré hors du boîtier du dispositif d'échange de données ;
- la figure 2 est une vue schématique de dessus d'un agencement selon la figure 1 qui illustre l'accostage de l'organe de commande en position arrière de repos par le bord transversal avant du support de données en vue de son introduction dans le logement du boîtier ;
- la figure 3 est une vue similaire à celle de la figure 2 qui illustre le support de données partiellement introduit dans le logement et l'organe de commande dans une position intermédiaire entre sa position arrière de repos et sa position avant de blocage dans laquelle le profil de came de l'organe de commande, par coopération avec le doigt de commande, provoque le pivotement de l'organe de blocage en position escamotée ;
- la figure 4 est une vue similaire à celle de la figure 3 qui illustre l'organe de blocage en position de blocage du support de données dans sa position active de lecture et le verrouillage de l'organe de blocage dans la position de blocage, l'organe de commande étant en position avant de blocage ;
- la figure 5 est une vue de dessus en perspective de trois-quarts arrière qui illustre schématiquement les principaux composants d'un agencement selon un deuxième mode de réalisation de l'invention, sur laquelle le support de données est illustré hors du boîtier du dispositif d'échange de données et l'organe de commande en position arrière de repos ;
- la figure 6 est une vue schématique de dessus d'un agencement selon la figure 5 qui illustre l'introduction du support de données dans le logement et l'organe de commande dans une position dans laquelle le doigt de commande coopère avec le profil de came de l'organe de commande à l'encontre de la sollicitation élastique s'exerçant sur l'organe de blocage vers sa position de blocage ;
- la figure 7 est une vue similaire à celle de la figure 6 qui illustre l'organe de blocage dans une position intermédiaire dans laquelle les doigts de blocage pincent latéralement les bords latéraux du support de données ;
- la figure 8 est une vue similaire à celle de la figure 7 qui illustre l'organe de blocage en position de blocage du support de données en position active de lecture et sur laquelle l'organe de commande est en position avant de blocage ;
- la figure 9 est une vue similaire à celle de la figure 8 qui illustre le verrouillage de l'organe de blocage dans sa position de blocage.

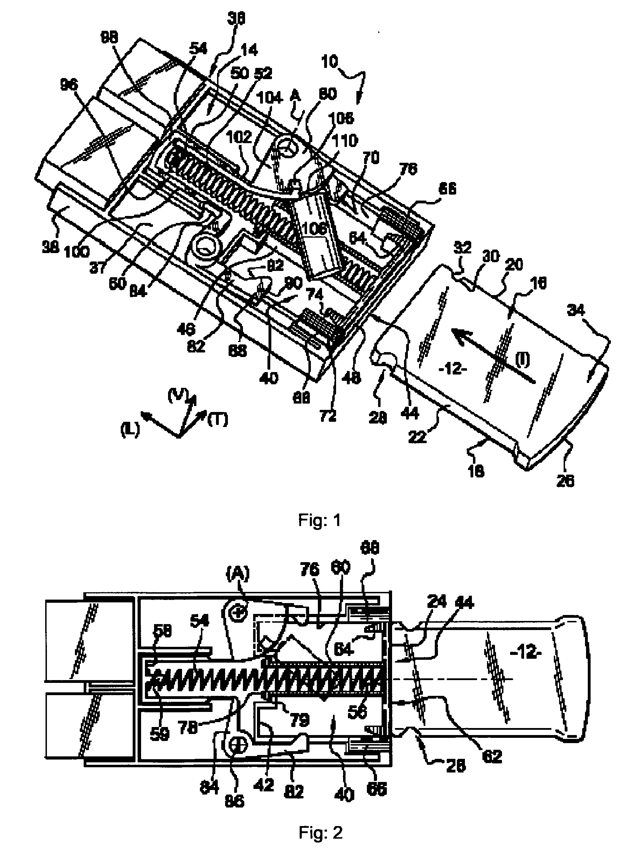

Dans la description qui va suivre, les termes "longitudinal", "transversal", "avant", "arrière", "supérieur", "inférieur", etc. sont utilisés en référence aux figures et selon le trièdre (L, V, T) de la figure 1 pour faciliter la compréhension de la description et des revendications et ceci à titre non limitatif.

L'agencement 10 conforme aux enseignements de l'invention illustré sur les figures est constitué pour l'essentiel par un support de données ou badge 12 et par un dispositif 14 d'échanges des données contenues dans ce support 12.

Le badge 12 est ici un élément rigide de forme générale parallélépipédique, plus spécifiquement plane symétrique rectangulaire et d'épaisseur réduite de conception.

Le badge 12 comporte une face supérieure 16 et une face inférieure 18 qui s'étendent horizontalement et que délimitent d'une part, dans la direction longitudinale, deux bords latéraux respectivement droit 20 et gauche 22 et, d'autre part, un bord transversal avant 24 et un bord transversal arrière 26.

Le badge 12 comporte, à sa partie avant et au voisinage de son bord transversal avant 24, un cran 28 de blocage dans chacun de ses bords latéraux 20, 22.

Le cran 28 est ouvert transversalement vers l'extérieur et présente, en section selon un plan horizontal, un profil en forme de V comportant deux branches constituées par un bord transversal arrière 30 et un bord transversal avant 32, qui forment des profils de came.

Le cran 28 est un cran de blocage au sens de l'invention, c'est-à-dire qu'il est destiné à recevoir une partie d'un organe de blocage que comporte le dispositif 14 et qui est susceptible de bloquer le badge 12 lorsque ce dernier occupe une position longitudinale déterminée.

La partie arrière du badge 12 au voisinage de son bord transversal arrière 26 constitue une partie de préhension 34 permettant de le manipuler et notamment de le déplacer longitudinalement parallèlement à son plan général horizontal.

Le badge 12 est un support de données qui est susceptible d'être introduit longitudinalement dans un dispositif 14 d'échange de données, c'est-à-dire comme visible sur la figure 1 selon la direction (l) parallèle au plan général horizontal du badge 12.

Le dispositif d'échange de données 14 va maintenant être décrit en détail, selon un premier mode de réalisation de l'invention et en référence aux figures 1 à 4.

Le dispositif 14 d'échange de données comporte un boîtier 36 qui constitue un sous-ensemble comportant des moyens (non représentés) de lecture et/ou d'écriture de données contenues dans le badge 12.

Le boîtier 36 comporte un corps extérieur (non représenté) de forme globalement parallélépipédique qui entoure au moins une platine centrale 38 s'étendant dans un plan horizontal, mieux visible sur la vue en éclaté de la figure 1.

La platine centrale 38 est une plaque ajourée, solidaire d'une plaque inférieure parallèle 37, de manière à constituer un support sur lequel les différents composants de l'agencement 10 sont montés.

Ainsi, les axes de pivotement, les appuis et les moyens de guidage, notamment des organes élastiques ou des composants qui sont montés mobiles par rapport au boîtier 36, sont avantageusement réalisés venus de matière avec la platine centrale 38 ou la plaque inférieure 37 par moulage en matière plastique.

Le boîtier 36 comporte un logement 40 de forme générale parallélépipédique rectangle en forme de fente horizontale qui est globalement délimité par la platine 38 et est fermé à son extrémité avant par un fond 42, avec son extrémité arrière qui est ouverte en une fenêtre 44 pour permettre l'introduction longitudinale d'arrière en avant du badge 12 selon la direction (l), et son extraction en sens inverse.

Le dispositif 14 d'échange de données comporte un organe de commande 46 d'un organe de blocage.

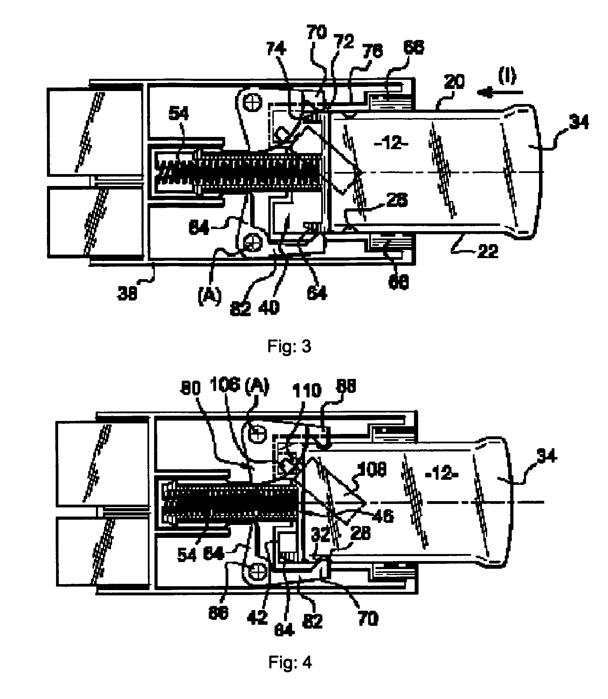

L'organe de commande 46 est monté mobile longitudinalement par rapport à la platine 38 et il est guidé en translation entre une position arrière de repos illustrée aux figures 1 et 2, et une position avant de blocage illustrée à la figure 4.

L'organe de commande 46 présente en section selon un plan horizontal un profil en « T » et il est constitué d'une barre arrière 48 s'étendant globalement transversalement et d'un corps avant 50 s'étendant globalement longitudinalement vers l'avant.

La barre arrière 48 de l'organe de commande 46 est, en section transversale, en forme de profilé en U définissant une rainure 52 dans laquelle est logé et reçu le tronçon arrière d'un organe élastique ici un ressort à boudin de compression 54 qui s'étend longitudinalement.

Le ressort 54 est monté comprimé dans le boîtier en appui par son extrémité arrière contre la face avant 56 de la barre arrière 48 et par son extrémité avant sur un appui 58 solidaire ici de l'organe de blocage, en variante du boîtier 36.

De préférence, la face arrière d'appui 58 comporte un plot de centrage 59 qui fait saillie de manière à pénétrer à l'intérieur des spires d'extrémité avant du ressort 54.

De plus, la rainure 52 est délimitée transversalement par des parois latérales 60 s'étendant longitudinalement et qui constituent des moyens de guidage, notamment du tronçon arrière de l'organe élastique 54.

La barre transversale arrière 48 de l'organe de commande 46 comporte une face arrière verticale 62, dite face d'accostage, et à chacune de ses extrémités transversales un bord latéral 64 qui s'étend à partir de la face 62 longitudinalement vers l'avant.

En position arrière de repos, l'organe de commande 46 obture la fenêtre 44 d'introduction du badge 12 dans le logement 40, la face arrière 62 étant globalement affleurante au plan vertical de la fenêtre 44.

La fenêtre d'introduction 44 comporte transversalement des glissières 66 de guidage des bords longitudinaux 20, 22 du badge 12 lors de son introduction.

Les bords latéraux 64 de l'organe de commande 46 comporte un profil de came 68 avec lequel coopère un doigt de commande 70 formant suiveur de came, qui est maintenu en contact avec le profil de came par un organe de rappel élastique et qui appartient à l'organe de blocage.

Le profil de came 68 comporte une portion arrière globalement rectiligne 72 d'orientation longitudinale qui se prolonge à l'avant par une rampe inclinée 74 qui coopère avec le doigt de commande 70 pour provoquer le déplacement de l'organe de blocage.

L'organe de commande 46 est avantageusement guidé en coulissement longitudinal lors de sa course entre sa position arrière de repos et sa position avant.

Le guidage de l'organe de commande 46 s'effectue à l'arrière et à l'avant par coopération avec des moyens de guidage solidaires de la platine 38 et/ou de l'organe de blocage.

Plus précisément, le guidage s'effectue en début de course entre la barre arrière 48 dont les bords latéraux 64 coopèrent avec des rails de guidage 76 situés en vis-à-vis et, en fin de course, entre les parois latérales 60 du corps avant 50 et des moyens de guidage solidaires de l'organe de blocage.

Le corps avant 50 de l'organe de commande 46 comporte à l'extrémité avant de chacune des parois latérales 60, des ergots de butée 78 qui coopèrent centralement avec la face avant du fond 42 solidaire de la platine centrale 38 qui constitue un épaulement 79.

La position arrière de repos de l'organe de commande 46, vers laquelle il est rappelé élastiquement par le ressort 54, est ainsi définie par la venue en butée des ergots 78 contre l'épaulement 79.

Les ergots de butée 78 présentent une élasticité selon la direction transversale de manière à permettre un montage initial irréversible de l'organe de commande 46.

Le doigt de commande 70 est solidaire d'un organe de blocage 80 qui est monté mobile par rapport au boîtier 36 entre une position de blocage dans laquelle il retient longitudinalement le badge 12 en position active dans le boîtier 36 et une position escamotée permettant l'extraction du badge 12 hors du boîtier 36.

L'organe de blocage 80 est sollicité élastiquement en permanence vers sa position de blocage par des moyens de rappel élastique qui sont constitués ici par l'organe élastique 54 qui sollicite l'organe de commande 46 vers sa position arrière de repos.

L'organe de blocage 80 s'étend dans un plan horizontal globalement parallèle à celui du badge 12 en position active.

L'organe de blocage 80 est un levier qui est monté pivotant autour d'un axe vertical (A) perpendiculaire au plan dans lequel est située la direction (l) d'introduction du badge 12 et qui comporte un bras latéral de blocage 82 et un bras transversal de rappel 84.

L'extrémité avant du bras latéral de blocage 82 est montée pivotante autour d'un pivot vertical 86 solidaire du boîtier 36, et l'extrémité arrière porte un doigt de blocage 88.

Le doigt de blocage 88 coopère, en position de blocage, avec le cran 28 du badge et présente en section par un plan longitudinal un profil en forme de « V » dont les deux branches constituent respectivement des profils de came avant 90 et arrière 92.

Le profil de came avant 92 du doigt de blocage 88 coopère avec le bord transversal avant 32 du cran 28 complémentaire du badge 12, notamment lors de l'extraction.

Le doigt de blocage 88 constitue aussi le doigt de commande 70 de l'organe de commande 46, plus précisément le profil de came arrière 90 du doigt de blocage 88 constitue le doigt de commande 70 formant suiveur de came qui coopère avec le profil de came 68 de l'organe de commande 46.

L'extrémité libre du bras de rappel 84 est sollicitée par des moyens de rappel élastique qui sont constitués par le ressort 54.

En effet, le bras de rappel 84 se prolonge à son extrémité libre par une partie avant 96 formant un logement avant du ressort 54.

La partie avant 96 formant logement est reçue longitudinalement dans une partie complémentaire de la platine 38 dans laquelle elle est guidée en translation.

Le logement avant 96 est délimité par à l'avant un bord transversal 98 dont la face verticale arrière forme l'appui 58 de l'extrémité avant du ressort 54 et latéralement par au moins un bord longitudinal 100 qui est solidaire de l'extrémité libre du bras de rappel 84.

Plus précisément, l'extrémité arrière du bord longitudinal 100 se raccorde au bras de rappel 84 par une zone de matière 102 de plus faible épaisseur qui se déforme élastiquement lors du déplacement en fonctionnement de l'organe de blocage 80.

L'organe de blocage 80 présente une symétrie selon un plan vertical globalement perpendiculaire au plan horizontal dans lequel est située la direction longitudinale d'introduction (l) du badge 12.

Sur au moins un des leviers formant l'organe de blocage 80, le bras de blocage 82 et le bras de rappel 84 sont reliés par une paroi horizontale de raccordement 104.

La paroi de raccordement 104 comporte un plot de verrouillage 106 qui s'étend verticalement à partir de sa face supérieure.

Le dispositif 14 comporte un organe commandé de verrouillage 108 de l'organe de blocage 80 dans sa position de blocage.

L'organe commandé de verrouillage 108 est illustré schématiquement sous la forme d'un électroaimant dont le noyau mobile constitue un doigt de verrouillage 110.

On décrira maintenant le fonctionnement de l'agencement 14 selon le premier mode de réalisation de l'invention en référence aux figures 2 à 4.

Lorsqu'il n'y a pas de badge 12 dans le logement 40 du boîtier 36, l'organe de commande 46 est, sous l'action du ressort 54, dans sa position arrière de repos, dans laquelle comme visible sur les figures 1 et 2, sa face arrière 62 obture la fenêtre d'introduction 44 de sorte que l'organe de commande 46 constitue un « volet » de fermeture de la fenêtre 44.

La position arrière de repos de l'organe de commande 46 est déterminée par les moyens de butée 78.

Dans cette position le doigt de commande 70 de l'organe de blocage 80 n'est pas en contact avec le profil de came 68 de l'organe de commande 46, mais il s'étend vers l'intérieur du logement 40 sous l'effet de rappel élastique du ressort 54, c'est à dire vers sa position de blocage.

L'introduction du badge 12 dans le logement 40 du boîtier 36 se fait manuellement par la partie de préhension 34 selon un mouvement longitudinal d'arrière en avant de manière que le bord transversal avant 24 accoste la face arrière 62 de l'organe de commande 46 comme visible sur la figure 2.

Ensuite comme visible sur la figure 3, sous l'action de l'effort qu'exerce l'utilisateur pour introduire le badge 12 dans le logement 40, l'organe de commande 46 quitte sa position arrière de repos et il se déplace longitudinalement vers l'avant à l'encontre du ressort de compression 54.

La portion rectiligne arrière 72 de chaque bord latéral 64 coopèrent lors de la première partie de la course de l'organe de commande 46 avec les rails de guidage 76 situés en vis-à-vis.

De la même manière, les bords latéraux 20, 22 du badge 12 coopèrent avec les glissières 66 agencées de part et d'autre de la fenêtre 44.

Puis le bord latéral 64 de l'organe de commande 46 qui est sensiblement aligné longitudinalement avec le doigt de commande 70 va venir en contact de sorte que la rampe de commande 74 du profil de came 68 qu'il comporte coopère avec le doigt de commande 70 de l'organe de blocage 80.

La rampe de commande 74 est constituée par la portion avant qui est inclinée de manière à provoquer le pivotement de l'organe de blocage 80 vers l'extérieur du logement, et ceci à l'encontre de l'effort de rappel élastique exercé par le ressort 54 sur le bras de rappel 84 de l'organe de blocage 80.

Le doigt de commande 70 formant suiveur de came parcourt ainsi le profil de came 68, soit d'abord la portion inclinée 74 formant rampe, puis la portion rectiligne 72 comme visible sur la figure 3.

L'organe de blocage 80 est alors en position escamotée, qu'il conserve tant que le doigt de commande 70 parcourt la portion rectiligne 102, puis la partie avant du bord latéral 20, 22 du badge 12 comprise longitudinalement entre le bord transversal avant 24 et le cran de blocage 28.

Ensuite, l'introduction du badge 12 se poursuivant, le doigt de blocage 88 qui est constitué par le doigt de commande 70 et donc sollicité par le ressort 54, pénètre automatiquement dans le cran latéral de blocage 28 lorsque celui-ci se trouve en coïncidence transversalement.

Comme visible sur la figure 4, l'organe de blocage 80 est alors en position de blocage dans laquelle il retient longitudinalement le badge 12 en position active dans le boîtier 36 et l'organe de commande 46 en position extrême avant.

La position extrême avant de l'organe de commande 46 est déterminée par la venue en butée des extrémités avant des bords latéraux 64 avec la face arrière du fond 42 de la platine délimitant le logement 40, évitant ainsi au ressort 54 formant l'organe de rappel élastique d'être inutilement sollicité si l'utilisateur continue d'exercer sur le badge 12 un effort longitudinal vers l'avant.

La position de blocage est un état stable.

En effet, les longueurs respectives des bras de blocage et de rappel et les caractéristiques du ressort 54 étant connues, on détermine par calcul les valeurs de manière que la force de blocage s'exerçant par l'intermédiaire des doigts de blocage 88 dans les crans latéraux 28 du badge 12 soit toujours supérieure à la force de rappel élastique exercée par le ressort 54 sur le bord transversal avant 24 du badge via l'organe de commande 46.

Avantageusement, il est dès lors possible de garantir par conception que la position de blocage reste une position stable au cours la durée de vie du dispositif 14, et cela même en cas de fatigue du ressort 54.

On obtient ainsi de manière simple et efficace un maintien et un blocage fiable du badge 12.

L'organe de verrouillage 108 est enfin commandé pour verrouiller l'organe de blocage 80 dans sa position de blocage, c'est-à-dire le badge 12 dans sa position active, et en interdire toute extraction volontaire ou non hors du logement.

Le noyau mobile de l'électroaimant 108 formant l'organe commandé de verrouillage, constitue un doigt de verrouillage 110 qui est commandé pour venir en saillie à l'extérieur du boîtier de l'électroaimant et venir s'étendre alors en regard d'une face latérale extérieure du plot de verrouillage 106 de l'organe de blocage 80 afin d'empêcher tout pivotement de ce dernier, de sa position de blocage vers sa position escamotée.

En position active, au moins une partie arrière 34 du badge 12 fait saillie hors du boîtier 36 de manière à constituer une partie de préhension permettant de l'extraire hors du boîtier 36.

Lorsque l'on désire extraire le badge 12 du dispositif de lecture et d'échange de données, il faut commencer par procéder au déverrouillage en rétractant le doigt de verrouillage 110.

Il est dès lors possible de procéder à l'extraction du badge 12 hors du boîtier 36 en exerçant sur la partie de préhension 34 du badge 12 un effort de sens opposé, c'est à dire longitudinalement d'avant en arrière, soit de la gauche vers la droite en considérant la figure 4 et en partant de la position de blocage illustrée.

Au cours de ce mouvement d'extraction, le profil de came avant 92 du doigt de blocage 88 coopère avec le bord transversal avant 32 du cran 28 de manière à faciliter l'extraction du badge 12 par coopération de forme.

De plus, l'extraction est avantageusement assistée par l'organe de commande 46 et le ressort 54 qui fait fonction d'organe d'éjection automatique du badge 12.

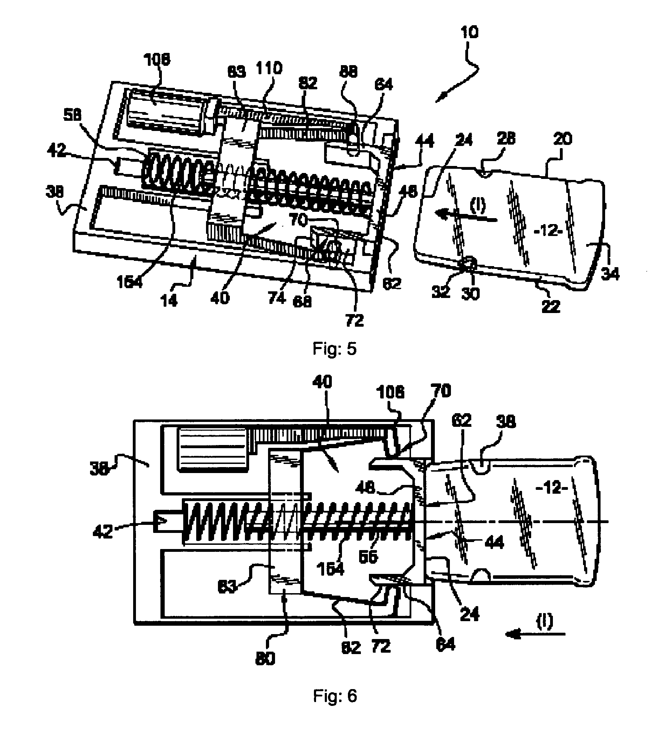

On va maintenant décrire par comparaison le deuxième mode de réalisation de l'invention illustré aux figures 5 à 9.

Comme visible sur la figure 5, l'organe de blocage 80 a globalement une forme symétrique en « U » et comporte deux bras latéraux de blocage 82, d'orientation globalement longitudinale qui sont reliés entre eux, à leurs extrémités avant, par une barre transversale 83.

Chaque bras de blocage 82 se comporte mécaniquement comme une poutre encastrée, ainsi l'extrémité avant est monté pivotante autour d'un axe globalement perpendiculaire au plan horizontal dans lequel est située la direction longitudinale d'introduction (I) du badge 12 et dont l'extrémité arrière est libre.

A son extrémité arrière, chaque bras latéral 82 comporte un doigt de blocage 88 formant aussi doigt de commande 70 formant suiveur de came, qui fait saillie transversalement vers l'intérieur du logement 40.

Chaque bras latéral 82 de l'organe de blocage 80 est ici réalisé sous la forme d'une lame déformable élastiquement qui constitue les moyens de rappel élastique sollicitant l'organe de blocage 80 vers sa position de blocage.

L'organe élastique 154 a donc ici pour seule fonction de rappeler élastiquement l'organe de commande 46 vers sa position arrière de repos.

L'organe de commande 46 ne comporte pas de rainure 52 pour guider l'extrémité arrière du ressort 154, mais une tige 55 qui s'étend depuis la barre transversale arrière 48 vers l'avant et à l'intérieur des spires du ressort 154.

La position extrême avant de l'organe de commande 46 est déterminée par le venue en butée de l'extrémité avant de la tige 55 contre le fond 42 solidaire de la platine 38.

Le ressort 154 est ainsi en appui à l'arrière sur la face avant de la barre transversale 48 et à l'avant sur un appui 58 que comporte la platine 38.

Le doigt de commande 70 est ici en permanence sollicité élastiquement pour coopérer avec le profil de came 68.

Plus précisément, et comme visible sur la figure 6, le doigt de commande 70 est, en position arrière de repos de l'organe de commande 46, en contact avec la portion rectiligne 72 du profil de came 68, les bras 82 et les bords latéraux 64 étant de plus grande longueur que précédemment.

Le profil de came 68 comporte à son extrémité avant une portion inclinée 172 formant rampe qui ne coopère avec le doigt de commande 70 que lors du montage du dispositif 14.

L'organe de blocage 80, bien que sollicité élastiquement vers sa position de blocage, est maintenu en position escamotée.

On va maintenant décrire le fonctionnement du deuxième mode réalisation en référence aux figures 6 à 9.

Comme visible sur la figure 6, le badge 12 est introduit comme précédemment dans la fenêtre 44 du logement 40 et l'organe de commande 46 quitte sa position arrière de repos pour se déplacer longitudinalement vers l'avant à l'encontre du ressort 154.

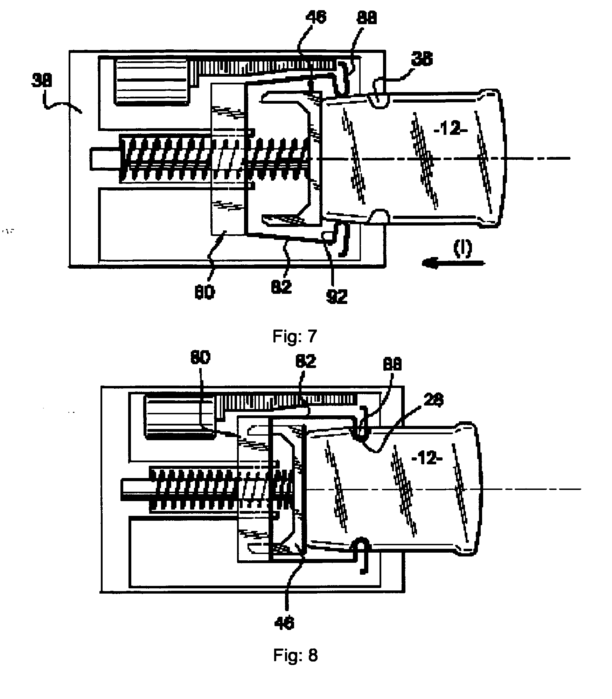

Lors de la première partie de la course de l'organe de commande 46, le doigt de commande 70 parcourt la portion rectiligne 72 du profil de came 68 et ce jusqu'à venir pincer la portion avant des bords latéraux 20, 22 du badge 12 comprise entre le bord transversal avant 24 et le cran de blocage 28, comme cela est visible sur la figure 7.

La figure 8 illustre l'organe de blocage 80 en position de blocage du badge 12 dans sa position active.

De manière analogue, le doigt de blocage 88 est reçu dans un cran latéral complémentaire 28 du badge 12.

On comprendra que la position de blocage est une position stable dès lors que l'effort de rappel vers l'arrière exercé par le ressort 154 sur le badge 12 par l'intermédiaire de l'organe de commande 46 est inférieur à celui exercé par les deux bras latéraux de blocage 82.

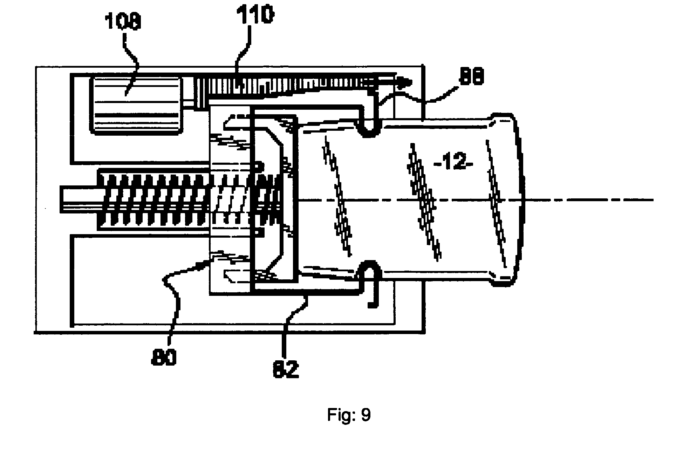

La figure 9 illustre le verrouillage de l'organe de blocage 80 dans la position de blocage. Pour ce faire, on commande l'électroaimant 108 de manière à provoquer la saillie à l'extérieur du noyau mobile qui agit sur un doigt de verrouillage 110 s'étendant longitudinalement et parallèlement au bras de blocage 82.

Le doigt de verrouillage 110 se déplace vers l'arrière jusqu'à venir en position de verrouillage dans laquelle il se trouve en vis-à-vis du doigt de blocage 88 et il interdit tout pivotement du bras de blocage 82 vers sa position escamotée.

Pour l'extraction du badge 12 hors du boîtier 36, on procède de manière analogue à celle décrite pour le premier mode de réalisation.

L'invention n'est nullement limitée au mode de réalisation décrit et représenté dans les figures, en effet de nombreuses variantes peuvent être envisagées sans sortir du cadre de la présente invention.

A titre de variante non représentée pour les deux modes de réalisation, il est possible de verrouiller de manière analogue l'organe de commande 46 dans sa position extrême avant.

En variante pour le premier mode de réalisation, les moyens de rappel élastique de l'organe de blocage 80 vers sa position de blocage qui sont constitués par le ressort 54, sollicitent directement l'extrémité libre des bras de rappel élastique 84 par l'intermédiaire d'une pièce d'appui telle qu'une rondelle.

L'invention présente l'avantage que le logement 40 recevant le badge 12 peut être fermé de façon étanche contre la poussière et des projections intempestives de liquide.

L'invention trouve notamment à s'appliquer à bord d'un véhicule automobile dont les fonctions d'antivol sont partiellement ou totalement assurées par traitement de données dont certaines, contenues dans le support ou badge 12, sont représentatives d'un utilisateur autorisé, ou d'un groupe d'utilisateurs autorisés, du véhicule.

Le traitement des données vise notamment à comparer les données contenues dans le badge 12 avec des données mémorisées à bord du véhicule en vue de permettre l'utilisation autorisée du véhicule, le ou les circuits de traitement assurant la commande totale ou partielle de moyens formant antivol, qu'il s'agisse d'un antivol classique, c'est-à-dire agissant sur la colonne de direction du véhicule, et/ou de moyens empêchant le démarrage du moteur du véhicule et/ou interrompant le fonctionnement du moteur.

## Revendications

1. Agencement (10) pour l'échange de données entre un support de données rigide (12), ou semi-rigide, et un dispositif (14) d'échange de données, notamment de lecture de données contenues dans le support, du type comportant un boîtier (36) dans lequel le support (12) de forme générale parallélépipédique est introduit longitudinalement, manuellement d'arrière en avant, dans un logement (40) du boîtier (36) dans lequel il occupe une position active déterminée, et du type dans lequel le dispositif (14) comporte un organe de blocage (80) qui est monté pivotant par rapport au bottier (36) entre une position de blocage dans laquelle il retient longitudinalement le support de données (12) en position active dans le boîtier (36), et une position escamotée permettant l'extraction du support de données (12) hors du boîtier (36), et un organe de commande (46) de l'organe de blocage (80) avec lequel est destiné à coopérer le bord transversal avant (24) du support de données (12), **caractérisé en ce que** l'organe de blocage (80) :
- est symétrique selon un plan vertical globalement perpendiculaire au plan horizontal dans lequel est située la direction longitudinale d'introduction (I) du support de données (12)
- comporte deux bras latéraux de blocage (82) montés pivotant autour de deux axes perpendiculaires au plan dans lequel est située la direction longitudinale d'introduction (I) du support de données (12), et
- est sollicité élastiquement en permanence par des moyens de rappel élastique (54, 82) vers la position de blocage,
- et **en ce que** l'organe de blocage (80) comporte un doigt de blocage (88) qui, en position de blocage, coopère avec un cran (28) complémentaire du support de données (12),
- et **en ce que** l'organe de commande (46) est monté mobile,
- d'une part en translation longitudinale par rapport au boîtier (36) entre une position arrière de repos et une position avant de commande du blocage, et
- d'autre part, par rapport à l'organe de blocage (80) avec lequel il coopère de manière à provoquer le blocage automatique du support de données (12) lorsque l'organe de commande (46) atteint une position avant déterminée.

2. Agencement (10) selon la revendication 1, **caractérisé en ce que** l'organe de commande (46) comporte un profil de came (68) et l'organe de blocage (80) comporte un doigt de commande (70) formant suiveur de came qui coopère avec le profil de came (68).

3. Agencement (10) selon la revendication 2, **caractérisé en ce que** le doigt de commande (70) coopère avec une portion inclinée (74) du profil de came (68) formant rampe de commande du passage de l'organe de blocage (80), au cours de l'introduction du support de données (12), de sa position de blocage à sa position escamotée.

4. Agencement (10) selon l'une quelconque des revendications précédentes, **caractérisé en ce que** le cran complémentaire (28) est réalisé dans au moins un bord longitudinal (20, 22) du support de données (12) et est ouvert transversalement pour recevoir le doigt de blocage (88).

5. Agencement (10) selon la revendication 4, **caractérisé en ce que** l'organe de blocage (80) comporte un bras latéral de blocage (82) d'orientation globalement longitudinale dont une extrémité avant est montée pivotante autour de l'axe vertical (A) et dont l'extrémité arrière porte le doigt de blocage (88).

6. Agencement (10) selon la revendication 5, **caractérisé en ce que** le bras latéral de blocage (82) est une lame déformable élastiquement qui constitue les moyens de rappel élastique de l'organe de blocage (80).

7. Agencement (10) selon la revendication 5, **caractérisé en ce que** l'organe de blocage (80) est un levier monté pivotant autour de l'axe vertical (A) qui comporte le bras latéral de blocage (82) et un bras transversal de rappel (84) qui est sollicité à son extrémité libre par les moyens de rappel élastique (54).

8. Agencement (10) selon l'une des revendications 6 ou 7. **caractérisé en ce que** les moyens de rappel élastique (54) sollicite en permanence le doigt de commande (70) de l'organe de blocage (80) en contact avec le profil de came (68) de l'organe de commande (46).

9. Agencement (10) selon l'une quelconque des revendications précédentes, **caractérisé en ce que** le doigt de blocage (88) présente, en section par un plan longitudinal, un profil en forme de « V » dont les deux branches constituent des profils de came arrière (90) et avant (92).

10. Agencement (10) selon la revendication 9, **caractérisé en ce que** le profil de came arrière (90) du doigt de blocage (88) constitue le doigt de commande (70) formant suiveur de came qui coopère avec le profil de came (68) de l'organe de commande (46).

11. Agencement (10) selon l'une des revendications 9 ou 10, **caractérisé en ce que** le profil de came avant (92) du doigt de blocage (88) coopère, lors de l'extraction du support de données (12), avec un bord transversal avant (32) de forme complémentaire du cran latéral (28) du support de données (12).

12. Agencement selon l'une quelconque des revendications précédentes, **caractérisé en ce qu'**il comporte un organe élastique (54, 154) qui est interposé entre l'organe de commande (46) et le bottier (36) et **en ce que** le déplacement de l'organe de commande (46) de sa position arrière de repos vers sa position avant s'effectue à l'encontre de cet organe élastique (54, 154) de manière à constituer un organe d'éjection automatique du support de données (12).

13. Agencement selon la revendication 12, **caractérisé en ce qu'**il comporte un ressort unique de compression (54) qui sollicite à l'avant le bras de rappel (84) du levier (80) et à l'arrière l'organe de commande (46) de manière à faire fonction d'organe élastique de l'organe de commande (46) et de moyens de rappel élastique de l'organe de blocage (80).

14. Agencement selon la revendication 13, **caractérisé en ce que** l'extrémité libre du bras de rappel (84) sur laquelle agissent les moyens de rappel élastique (54) constitue un logement avant (96) du ressort (54).

15. Agencement (10) selon l'une quelconque des revendications précédentes, **caractérisé en ce qu'**en position arrière de repos, l'organe de commande (46) obture une fenêtre (44) d'introduction du support de données (12) dans le logement (40).

16. Agencement (10) selon l'une quelconque des revendications précédentes, **caractérisé en ce qu'**il comporte des moyens de butée avant (42) et arrière (79) solidaires du boîtier qui déterminent respectivement les positions avant de blocage et arrière de repos de l'organe de commande (46).

17. Agencement (10) selon l'une quelconque des revendications précédentes, **caractérisé en ce qu'**en position active, au moins une partie arrière du support de données (12) fait saillie hors du boîtier (36) de manière à constituer une partie de préhension (34) permettant de l'extraire hors du boîtier (36).

18. Agencement (10) selon l'une quelconque des revendications précédentes, **caractérisé en ce que** le dispositif comporte un organe (108) commandé de verrouillage de l'organe de blocage (80) dans la position de blocage, le support de données (12) étant en position active.

19. Agencement (10) selon la revendication précédente, **caractérisé en ce que** l'organe commandé de verrouillage est un électroaimant (108) dont le noyau mobile constitue un doigt de verrouillage (110) qui peut être commandé en saillie à l'extérieur du bottier de l'électroaimant pour s'étendre en regard d'une partie (106) de l'organe de blocage (80) afin d'empêcher tout pivotement de ce dernier de sa position de blocage vers sa position escamotée.

20. Agencement (10) selon l'une quelconque des revendications précédentes, **caractérisé en ce qu'**il équipe un véhicule automobile dont les fonctions d'antivol sont partiellement ou totalement assurées par traitement de données dont certaines, contenues dans le support de données (12), sont représentatives d'un utilisateur autorisé, ou d'un groupe d'utilisateurs autorisés, du véhicule.

## Claims

1. Arrangement (10) for the exchange of data between a rigid, or semirigid, data carrier (12), and a data exchange device (14), notably for reading data contained in the carrier, of the type comprising a casing (36) into which the carrier (12) of generally parallelepipedal shape is longitudinally inserted, manually from front to back, in a housing (40) of the casing (36) in which it occupies a determined active position, and of the type in which the device (14) includes a blocking member (80) which is mounted to pivot relative to the casing (36) between a blocking position in which it longitudinally retains the data carrier (12) in the active position in the casing (36), and a retracted position enabling the data carrier (12) to be extracted from the casing (36), and a control member (46) for the blocking member (80) with which the front transversal edge (24) of the data carrier (12) is intended to cooperate, **characterized in that** the blocking member (80):
- is symmetrical in a vertical plane globally perpendicular to the horizontal plane in which the longitudinal direction of insertion (I) of the data carrier (12) is situated,
- comprises two lateral blocking arms (82) mounted to pivot about two axes perpendicular to the plane in which the longitudinal direction of insertion (I) of the data carrier (12) is situated, and
- is permanently elastically stressed by elastic return means (54, 82) towards the blocking position,
- and **in that** the blocking member (80) comprises a blocking finger (88) which, in the blocking position, cooperates with a complementary notch (28) of the data carrier (12),
- and **in that** the control member (46) is mounted to be mobile,
- on the one hand in longitudinal translation relative to the casing (36) between a rear rest position and a front blocking control position, and
- on the other hand, relative to the blocking member (80) with which it cooperates so as to result in the automatic blocking of the data carrier (12) when the control member (46) reaches a determined front position.

2. Arrangement (10) according to Claim 1, **characterized in that** the control member (46) comprises a cam profile (68) and the blocking member (80) comprises a control finger (70) forming a cam follower which cooperates with the cam profile (68).

3. Arrangement (10) according to Claim 2, **characterized in that** the control finger (70) cooperates with an inclined portion (74) of the cam profile (68) forming a control ramp for the passage of the blocking member (80), during the insertion of the data carrier (12), from its blocking position to its retracted position.

4. Arrangement (10) according to any one of the preceding claims, **characterized in that** the complementary notch (28) is produced in at least one longitudinal edge (20, 22) of the data carrier (12) and is open transversely to receive the blocking finger (88).

5. Arrangement (10) according to Claim 4, **characterized in that** the blocking member (80) comprises a lateral blocking arm (82) of globally longitudinal orientation, a front end of which is mounted to pivot about the vertical axis (A) and the rear edge of which supports the blocking finger (88).

6. Arrangement (10) according to Claim 5, **characterized in that** the lateral blocking arm (82) is an elastically deformable blade which constitutes the elastic return means of the blocking member (80).

7. Arrangement (10) according to Claim 5, **characterized in that** the blocking member (80) is a lever mounted to pivot about the vertical axis (A) which comprises the lateral blocking arm (82) and a transversal return arm (84) which is stressed at its free end by the elastic return means (54).

8. Arrangement (10) according to one of Claims 6 or 7, **characterized in that** the elastic return means (54) permanently stress the control finger (70) of the blocking member (80) in contact with the cam profile (68) of the control member (46).

9. Arrangement (10) according to any one of the preceding claims, **characterized in that** the blocking finger (88) has, in section through a longitudinal plane, a "V" shaped profile of which the two branches constitute rear (90) and front (92) cam profiles.

10. Arrangement (10) according to Claim 9, **characterized in that** the rear cam profile (90) of the blocking finger (88) constitutes the control finger (70) forming the cam follower which cooperates with the cam profile (68) of the control member (46).

11. Arrangement (10) according to one of Claims 9 or 10, **characterized in that** the front cam profile (92) of the blocking finger (88) cooperates, during the extraction of the data carrier (12), with a front transversal edge (32) of a shape complementing the lateral notch (28) of the data carrier (12).

12. Arrangement according to any one of the preceding claims, **characterized in that** it comprises an elastic member (54, 154) which is interposed between the control member (46) and the casing (36) and **in that** the displacement of the control member (46) from its rear rest position to its front position is performed against this elastic member (54, 154) so as to constitute an automatic ejection member for automatically ejecting the data carrier (12).

13. Arrangement according to Claim 12, **characterized in that** it comprises a single compression spring (54) which stresses, at the front, the return arm (84) of the lever (80) and, at the rear, the control member (46) so as to serve as elastic member for the control member (46) and elastic return means for the blocking member (80).

14. Arrangement according to Claim 13, **characterized in that** the free end of the return arm (84) on which the elastic return means (54) act constitutes a front housing (96) for the spring (54).

15. Arrangement (10) according to any one of the preceding claims, **characterized in that**, in the rear rest position, the control member (46) seals a window (44) for insertion of the data carrier (12) into the housing (40).

16. Arrangement (10) according to any one of the preceding claims, **characterized in that** it comprises front (42) and rear (79) abutment means securely attached to the casing which respectively determine the front blocking and rear rest positions of the control member (46).

17. Arrangement (10) according to any one of the preceding claims, **characterized in that**, in the active position, at least a rear part of the data carrier (12) protrudes out of the casing (36) so as to constitute a gripping part (34) that makes it possible to extract it from the casing (36).

18. Arrangement (10) according to any one of the preceding claims, **characterized in that** the device comprises a controlled member (108) for locking the blocking member (80) in the blocking position, the data carrier (12) being in the active position.

19. Arrangement (10) according to the preceding claim, **characterized in that** the controlled locking member is an electromagnet (108) whose mobile core constitutes a locking finger (110) which can be controlled to protrude outside the casing of the electromagnet to be extended facing a part (106) of the blocking member (80) in order to prevent any pivoting of the latter from its blocking position to its retracted position.

20. Arrangement (10) according to any one of the preceding claims, **characterized in that** it is used to equip a motor vehicle whose antitheft functions are partially or totally handled by the processing of data, some of which, contained in the data carrier (12), are representative of an authorized user, or of a group of authorized users, of the vehicle.

## Patentansprüche

1. Anordnung (10) zum Datenaustausch zwischen einem starren oder halbstarren Datenträger (12) und einer Vorrichtung (14) zum Datenaustausch, insbesondere zum Lesen von in dem Träger enthaltenen kontinuierlichen Daten, jener Art, die ein Gehäuse (36) aufweist, in dem der Träger (12) allgemein parallelepipedischer Form manuell in Längsrichtung von hinten nach vorne in eine Aufnahme (40) des Gehäuses (36) eingeführt wird, in dem er eine bestimmte aktive Stellung einnimmt, und jener Art, bei der die Vorrichtung (14) ein Blockierglied (80), das schwenkbar bezüglich des Gehäuses (36) zwischen einer Blockierstellung, in der es den Datenträger (12) in aktiver Stellung in Längsrichtung in dem Gehäuse (36) festhält, und einer eingezogenen Stellung, die das Herausziehen des Datenträgers (12) aus dem Gehäuse (36) gestattet, angebracht ist, und ein Glied (46) zur Betätigung des Blockierglieds (80), mit dem der vordere Querrand (24) des Datenträgers (12) zusammenwirken soll, aufweist, **dadurch gekennzeichnet, dass** das Blockierglied (80):
- entlang einer vertikalen, allgemein senkrecht zu der horizontalen Ebene, in der die in Längsrichtung verlaufende Einführrichtung (I) des Datenträgers (12) liegt, verlaufenden Ebene symmetrisch ist,
- zwei laterale Blockierarme (82) aufweist, die um zwei senkrecht zu der Ebene, in der die in Längsrichtung verlaufende Einführrichtung (I) des Datenträgers (12) liegt, verlaufende Achsen schwenkbar angebracht sind, und
- durch elastische Rückholmittel (54, 82) dauerhaft in die Blockierstellung elastisch vorgespannt ist,
- und das Blockierglied (80) einen Blockierfinger (88) aufweist, der in Blockierstellung mit einem komplementären Einschnitt (28) des Datenträgers (12) zusammenwirkt,
- und dass das Betätigungsglied (46) beweglich angebracht ist,
- einerseits längstranslatorisch bezüglich des Gehäuses (36) zwischen einer hinteren Ruhestellung und einer vorderen Blockierungsbetätigungsstellung, und
- andererseits bezüglich des Blockierglieds (80), mit dem es zusammenwirkt, um das automatische Blockieren des Datenträgers (12) zu bewirken, wenn das Betätigungsglied (46) eine vordere bestimmte Stellung erreicht.

2. Anordnung (10) nach Anspruch 1, **dadurch gekennzeichnet, dass** das Betätigungsglied (46) ein Nockenprofil (68) aufweist und das Blockierglied (80) einen Betätigungsfinger (70) aufweist, der einen Nockenfolger bildet, welcher mit dem Nockenprofil (68) zusammenwirkt.

3. Anordnung (10) nach Anspruch 2, **dadurch gekennzeichnet, dass** der Betätigungsfinger (70) mit einem geneigten Teil (74) des Nockenprofils (68) zusammenwirkt, der eine Rampe zum Bewirken des Passierens des Blockierglieds (80) beim Einführen des Datenträgers (12) aus seiner Blockierstellung in seine eingezogene Stellung bildet.

4. Anordnung (10) nach einem der vorhergehenden Ansprüche, **dadurch gekennzeichnet, dass** der komplementäre Einschnitt (28) in mindestens einem Längsrand (20, 22) des Datenträgers (12) ausgeführt ist und in Querrichtung zur Aufnahme des Blockierfingers (88) offen ist.

5. Anordnung (10) nach Anspruch 4, **dadurch gekennzeichnet, dass** das Blockierglied (80) einen lateralen Blockierarm (82) mit allgemeiner Längsausrichtung aufweist, von welchem ein vorderes Ende schwenkbar um die vertikale Achse (A) angebracht ist und dessen hinteres Ende den Blockierfinger (88) trägt.

6. Anordnung (10) nach Anspruch 5, **dadurch gekennzeichnet, dass** der laterale Blockierarm (82) ein elastisch verformbares Blatt ist, das die elastischen Rückholmittel des Blockierglieds (80) bildet.

7. Anordnung (10) nach Anspruch 5, **dadurch gekennzeichnet, dass** das Blockierglied (80) ein Hebel ist, der schwenkbar um die vertikale Achse (A) angebracht ist und den lateralen Blockierarm (82) und einen Rückholquerarm (84) aufweist, der an seinem freien Ende durch die elastischen Rückholmittel (54) vorgespannt ist.

8. Anordnung (10) nach Anspruch 6 oder 7, **dadurch gekennzeichnet, dass** die elastischen Rückholmittel (54) den Betätigungsfinger (70) des Blockierglieds (80) dauerhaft in Kontakt mit dem Nockenprofil (68) des Betätigungsglieds (46) vorspannen.

9. Anordnung (10) nach einem der vorhergehenden Ansprüche, **dadurch gekennzeichnet, dass** der Blockierfinger (88) im Schnitt durch eine Längsebene ein "V"-förmiges Profil aufweist, dessen beiden Arme das hintere (90) und das vordere (92) Nockenprofil bilden.

10. Anordnung (10) nach Anspruch 9, **dadurch gekennzeichnet, dass** das hintere Nockenprofil (90) des Blockierfingers (88) den Betätigungsfinger (70) bildet, der den Nockenfolger bildet, welcher mit dem Nockenprofil (68) des Betätigungsglieds (46) zusammenwirkt.

11. Anordnung (10) nach Anspruch 9 oder 10, **dadurch gekennzeichnet, dass** das vordere Nockenprofil (92) des Blockierfingers (88) beim Herausziehen des Datenträgers (12) mit einem vorderen Querrand (32) zusammenwirkt, der eine komplementäre Form zu dem lateralen Einschnitt (28) des Datenträgers (12) aufweist.

12. Anordnung (10) nach einem der vorhergehenden Ansprüche, **dadurch gekennzeichnet, dass** sie ein elastisches Glied (54, 154) aufweist, das zwischen dem Betätigungsglied (46) und dem Gehäuse (36) angeordnet ist, und die Verschiebung des Betätigungsglieds (46) aus seiner hinteren Ruhestellung in seine vordere Stellung entgegen diesem elastischen Glied (54, 154) erfolgt, so dass ein Glied zum automatischen Ausstoßen des Datenträgers (12) gebildet wird.

13. Anordnung nach Anspruch 12, **dadurch gekennzeichnet, dass** sie eine einzige Druckfeder (54) aufweist, die den Rückholarm (84) des Hebels (80) nach vorne und das Betätigungsglied (46) nach hinten vorspannt, um als elastisches Glied des Betätigungsglieds (46) und der elastischen Rückholmittel des Blockierglieds (80) zu fungieren.

14. Anordnung nach Anspruch 13, **dadurch gekennzeichnet, dass** das freie Ende des Rückholarms (84), auf das die elastischen Rückholmittel (54) wirken, eine vordere Aufnahme (96) der Feder (54) bilden.

15. Anordnung (10) nach einem der vorhergehenden Ansprüche, **dadurch gekennzeichnet, dass** das Betätigungsglied (46) in der hinteren Ruhestellung ein Fenster (44) zum Einführen des Datenträgers (12) in die Aufnahme (40) verschließt.

16. Anordnung (10) nach einem der vorhergehenden Ansprüche, **dadurch gekennzeichnet, dass** sie ein vorderes (42) und ein hinteres (79) Anschlagmittel aufweist, die fest mit dem Gehäuse verbunden sind und die vordere Blockierstellung bzw. die hintere Ruhestellung des Betätigungsglieds (46) festlegen.

17. Anordnung (10) nach einem der vorhergehenden Ansprüche, **dadurch gekennzeichnet, dass** in der aktiven Stellung mindestens ein hinterer Teil des Datenträgers (12) aus dem Gehäuse (36) vorragt, um einen Greifteil (34) zu bilden, der das Herausziehen aus dem Gehäuse (36) gestattet.

18. Anordnung (10) nach einem der vorhergehenden Ansprüche, **dadurch gekennzeichnet, dass** die Vorrichtung ein betätigtes Glied (108) zur Verriegelung des Blockierglieds (80) in der Blockierstellung aufweist, wobei sich der Datenträger (12) in der aktiven Stellung befindet.

19. Anordnung (10) nach dem vorhergehenden Anspruch, **dadurch gekennzeichnet, dass** das betätigte Verriegelungsglied ein Elektromagnet (108) ist, dessen beweglicher Kern einen Verriegelungsfinger (110) bildet, der zum Vorragen von der Außenseite des Gehäuses des Elektromagneten betätigt werden kann, um sich gegenüber einem Teil (106) des Blockierglieds (80) zu erstrecken und so jegliches Schwenken dieses Letzteren aus seiner Blockierstellung in seine eingezogene Stellung zu verhindern.

20. Anordnung (10) nach einem der vorhergehenden Ansprüche, **dadurch gekennzeichnet, dass** sie in einem Kraftfahrzeug vorgesehen ist, dessen Diebstahlsicherungsfunktionen teilweise oder vollständig durch Verarbeitung von Daten gewährleistet werden, von denen bestimmte, die in dem Datenträger (12) enthalten sind, einen autorisierten Benutzer oder eine Gruppe von autorisierten Benutzern des Fahrzeugs darstellen.
